# EUROPEAN PATENT APPLICATION

(11) **EP 0 568 158 A1**
(43) Date of publication of application: **03.11.1993**
(21) Application number: 93201226.3
(22) Date of filing: 28.04.1993
(51) Int. Cl.: A47B 96/06, A47F 5/08, D06F 57/12, B60P 3/34, E04H 15/08

(54) **Supporting structure for a hinge rail**

(30) Priority: 28.04.1992 NL 9200779
(71) Applicant: C.M.C. HOLLAND B.V., NL-3991 AS Houten (NL)
(72) Inventor: Tromp, Klaas Peter, NL-7545 AN Enschede (NL)
(74) Representative: Schumann, Bernard Herman Johan

(57) **Abstract**

Supporting structure (11) comprising an elongate carrier arm (2) particularly suitable for releasable connection to a horizontally extending rail (7) provided with an undercut longitudinal groove (6), which supporting structure (11) further comprises a fixing part (5), which has a form complementary to the said groove (6) and can engage therein, in addition to a supporting part (3) to support the structure on a support point (8) below the fixing part.

## Description

The invention relates to a supporting structure particularly suitable for releasable connection to a rail, for example the hinge rail for a window of a caravan.

Such a supporting structure is not known.

The object of the invention is to provide a supporting structure that is particularly suitable for releasable connection to a horizontally extending rail provided with an undercut longitudinal groove. This object is realized according to the invention with a supporting structure comprising an elongate carrier arm, which supporting structure further comprises a fixing part, which has a form complementary to the said groove and can engage therein, in addition to a supporting part to support the structure on a support point under the fixing part.

Such a supporting structure according to the invention can be placed in simple manner with the fixing part from a side of a rail provided with an undercut longitudinal groove.

In an embodiment of a supporting structure according to the invention the supporting part comprises a supporting arm which extends transversely from the end of the carrier arm provided with the fixing part and is connected on the other outer end with a strengthening arm to a point along the transverse arm.

Such a supporting structure is particularly suitable for sliding into the window profile of a window in a vertical caravan wall. When the supporting structure is pushed into a window profile attached to a vertical wall the elongate carrier arm of the supporting structure extends horizontally and the supporting structure is supported by the supporting arm on a vertical surface in a point beneath the fixing part.

In most commercially available caravans a hinge rail of determined form and dimensions is used for fastening the open windows. Such a hinge rail is about 32 cm wide, is provided on the top with an undercut longitudinal groove, which longitudinal groove has in cross section at least partially the form of a circle with a diameter of about 8 mm, and is provided at the bottom with a bulging portion of semi-circular cross section which protrudes about 12 mm from the rear surface of the profile.

In an embodiment of a supporting structure according to the invention the fixing part is connected to the carrier arm by a connecting piece with a length of about 3 mm.

A supporting structure according to this latter embodiment is particularly suitable for use in a caravan hinge rail of the above stated dimensions, because the presence of a connecting piece of the said length has the result that, when the carrier arm of a supporting structure placed in this rail is in horizontal position, the supporting arm rests correctly on a lower bulging portion of this rail. When moreover the length of the supporting arm of such a supporting structure amounts to about 25 mm a supporting arm supporting on a standard hinge rail does not protrude below this rail.

To prevent pivoting of a supporting structure placed in a rail and to prevent damage to the longitudinal groove by the fixing part of the carrier arm placed therein, the width of the fixing part amounts to between about 25 mm and 40 mm, more particularly around 32 mm. Such a width offers particular advantage when two such supporting structures are pushed into a hinge rail at some mutual distance and are connected by a tensioned line. As a result of the tension in the line the supporting structures are buttressed with their fixing part in the longitudinal groove and thus locked against undesired shifts.

In yet another embodiment the carrier arm, the supporting arm and the strengthening arm form part of one body. This one body for instance has a triangular form in vertical lengthwise section, which form is bounded by the three said arms, but is not limited to this triangular form.

In still another embodiment the supporting structure is provided with holes or slots.

Use can be made of the holes or slots in order to facilitate tensioning of lines between two supporting structures placed into a rail. A supporting structure provided with holes or slots is therefore particularly suitable for use as clothes line carrier.

A supporting structure according to the invention can be manufactured in known manner from metal by punching and welding.

In an embodiment of a supporting structure that can be produced in very economic manner the supporting structure is an injection moulded article.

The supporting structure comprises for instance a plastic material. A plastic supporting structure can be manufactured by injection moulding and can therein be provided in simple manner with for instance strengthening ribs.

In another embodiment of a supporting structure which can likewise be produced in very economic manner the supporting structure is an element separated from an extrusion profile.

The supporting structure preferably comprises aluminium. A supporting structure comprising aluminium can be produced in exceptionally economic manner by means of an extrusion process. An aluminium-containing supporting structure moreover has the advantage that it is light which is important, particularly when it is used as accessory attachment, for instance clothes line carrier, of a caravan.

The invention will be further elucidated hereinafter in the light of an embodiment with reference to the drawing.

In the drawing:
figure 1 shows in perspective view an embodiment of supporting structures placed in a hinge rail;
figure 2 shows in side view a detail of the supporting structure of figure 1 placed in a hinge rail; and
figure 3 shows an example of an application of a supporting structure as clothes line carrier on a caravan.

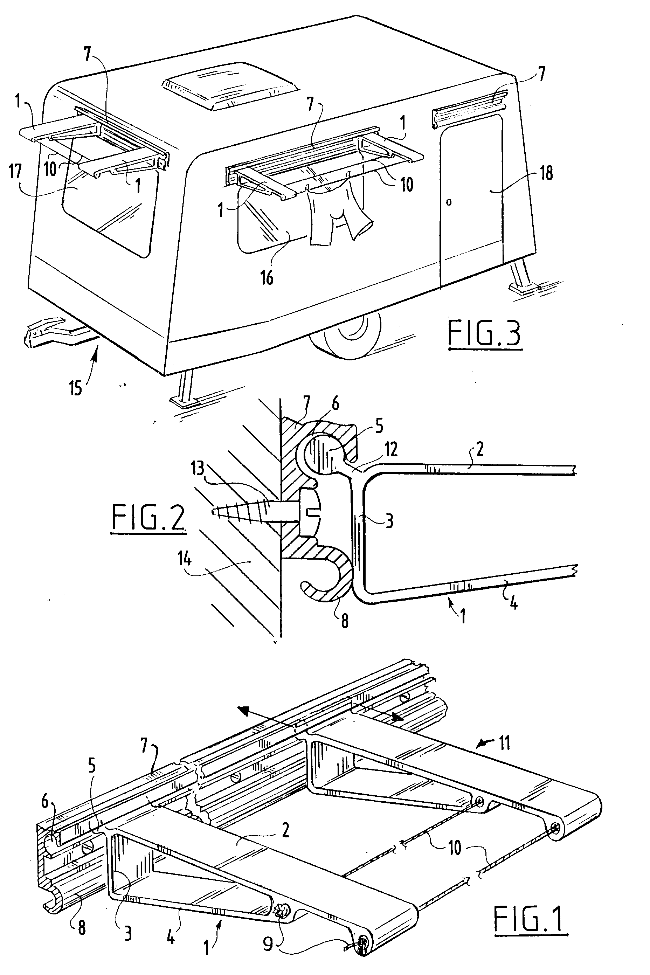

Figure 1 shows a supporting structure 1 with horizontal carrier arm 2, vertical supporting arm 3 and sloping strengthening arm 4. Using fixing part 5 the supporting structure 1 is slid into an undercut groove 6 of a hinge rail 7. The vertical supporting arm 3 supports on a bulging portion 8 of hinge rail 7. Supporting structure 1 is provided with holes 9 whereby for instance a clothes line 10 to a second supporting structure 11 can be fastened. The arrows designate the couple of forces exerted by supporting structure 11 on hinge rail 7 when the lines 10 are tensioned.

Figure 2 shows in detail a part of a supporting structure 1 with a portion of a horizontal carrier arm 2, a vertical supporting arm 3 and a portion of a strengthening arm 4. The fixing part 5 pushed into groove 6 is connected by means of a connecting piece 12 to the other parts 2, 3 of the supporting structure, wherein the length of the connecting piece 12 is chosen such that in the application shown the supporting arm 3 rests in vertical position on the bulging portion 8 of hinge rail 7. The figure further shows a screw 13 with which the hinge rail is fixed to a wall 14.

Figure 3 shows an embodiment of an application of the supporting structure according to the invention as clothes line carrier for a caravan 15 which is provided above the windows 16, 17 and the door 18 with hinge rails 7. In the embodiment shown two supporting structures 1 according to the invention are slid into a hinge rail 7 above a window 16, between which a clothes line 10 is tensioned.

## Claims

1. Supporting structure comprising an elongate carrier arm, particularly suitable for releasable connection to a horizontally extending rail provided with an undercut longitudinal groove, which supporting structure further comprises a fixing part, which has a form complementary to the said groove and can engage therein, in addition to a supporting part to support the structure on a support point below the fixing part.

2. Supporting structure as claimed in claim 1, **characterized in that** the supporting part comprises a supporting arm which extends transversely from the end of the carrier arm provided with the fixing part and is connected at the other outer end with a strengthening arm to a point along the transverse arm.

3. Supporting structure as claimed in claim 2, **characterized in that** the fixing part is connected to the carrier arm by a connecting piece with a length of about 3 mm.

4. Supporting structure as claimed in claim 3, **characterized in that** the length of the supporting arm amounts to about 25 mm.

5. Supporting structure as claimed in claim 1, **characterized in that** the width of the supporting structure amounts to between about 25 and 40 mm.

6. Supporting structure as claimed in claim 5, **characterized in that** the width amounts to about 32 mm.

7. Supporting structure as claimed in claim 2, **characterized in that** the carrier arm, the supporting arm and the strengthening arm form part of one body.

8. Supporting structure as claimed in any of the foregoing claims, **characterized in that** it is provided with holes.

9. Supporting structure as claimed in any of the foregoing claims, **characterized in that** it is provided with slots.

10. Supporting structure as claimed in any of the foregoing claims, **characterized in that** it is an injection moulded article.

11. Supporting structure as claimed in any of the foregoing claims, **characterized in that** it comprises a plastic material.

12. Supporting structure as claimed in any of the foregoing claims**, characterized in that** it is an element separated from an extrusion profile.

13. Supporting structure as claimed in any of the foregoing claims, **characterized in that** it comprises aluminium.
